# EUROPÄISCHE PATENTSCHRIFT

(11) **EP 0 779 332 B1**
(45) Veröffentlichungstag und Bekanntmachung des Hinweises auf die Patenterteilung: **07.07.1999**
(21) Anmeldenummer: 96118175.7
(22) Anmeldetag: 13.11.1996
(51) Int. Cl.: C08K 5/527, C08L 75/04

(54) **Flammwidrige polymere Massen**
Flame retardant polymeric matter
Matières polymériques ignifuges

(30) Priorität: 15.12.1995 DE 19546834
(43) Veröffentlichungstag der Anmeldung: 18.06.1997
(73) Patentinhaber: Clariant GmbH, 65929 Frankfurt am Main (DE)
(72) Erfinder: Staendeke, Horst, Dr., 53797 Lohmar (DE)

(56) Entgegenhaltungen:
- WO-A-80/01697
- DE-A- 2 342 928
- US-A- 4 035 448
- PATENT ABSTRACTS OF JAPAN vol. 003, no. 100 (C-056), 24.August 1979 & JP 54 080355 A (MITSUBISHI RAYON CO LTD;OTHERS: 01), 27.Juni 1979,
- JOURNAL F. PRAKT. CHEMIE, Bd. 326, Nr. 4, 1984, Seiten 622-632, XP000646702 RÜGER ET AL.: "phosphororganische antioxidantien III"
- JOURNAL FÜR PRAKTISCHE CHEMIE, Bd. 334, Nr. 4, 1992, Seiten 333-349, XP002028188 KÖNIG ET AL.: "phosphororganische antioxidantien XII"

## Beschreibung

Die Erfindung betrifft flammwidrige polymere Massen.

Es ist bekannt, polymere Massen mit halogenhaltigen organischen Verbindungen, insbesondere in Kombination mit Antimontrioxid, flammwidrig auszurüsten [J. Troitsch, International Plastics Flammability Handbook, Carl-Hanser-Verlag München (1990), S. 53-60].

Gleichfalls bekannt ist, Kunststoff-Formmassen mit halogenfreien Intumeszenz-Flammschutzmitteln auf Basis Ammoniumpolyphosphat, wie sie beispielsweise in US-A-4,198,493, US-A-4,461,862, EP-A-0 258 685 und EP-A-0 584 567 beschrieben sind, flammwidrig auszurüsten.

Ferner findet sich in Chemical Abstracts 93, 133266 (1980) ein Hinweis auf die Prüfung verschiedener Halogenalkylester von cyclischen Phosphorsäureestern als Flammschutzmittel.

Überraschenderweise wurde nun gefunden, daß polymere Massen, die einen halogenfreien cyclischen Phosphorsäureester enthalten, einen ausgezeichneten Flammschutzeffekt aufweisen.

So konnte gezeigt werden, daß beim Polyester-Polyurethan-Weichschaum für eine Einstufung in die Klasse UL 94-HF1 bei Verwendung von Ammoniumpolyphosphat, dem am besten geeigneten halogenfreien Flammschutzmittel für diesen PUR-Schaumtyp, die 3-fache Menge im Vergleich zu einem erfindungsgemäßen halogenfreien cyclischen Phosphorsäureester eingesetzt werden muß.

Dies war überraschend und nicht vorhersehbar, weil das Ammoniumpolyphosphat nicht nur einen mehr als doppelt so hohen Phosphorgehalt (31,5 % gegenüber 12,8 %) aufweist, sondern auch noch über den Phosphor/Stickstoff-Synergismus bei einem Stickstoffgehalt von 14,5 % einen zusätzlichen Flammschutzbeitrag leisten kann.

Gegenstand der Erfindung sind daher flammwidrige polymere Massen, die als Flammschutzmittel einen halogenfreien cyclischen Phosphorsäureester der allgemeinen Formel 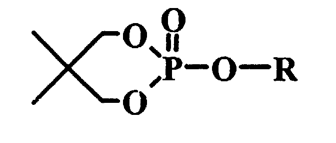 mit
- R =: Phenyl, 2-Methylphenyl, 3-Methylphenyl, 4-Methylphenyl, 2,3-Dimethylphenyl, 2,4-Dimethylphenyl, 2,5-Dimethylphenyl, 2,6-Dimethylphenyl, 3,4-Dimethylphenyl oder 3,5-Dimethylphenyl
enthalten.

Enthalten die flammwidrigen polymeren Massen den halogenfreien cyclischen Phosphorsäureester in Kombination mit anderen Flammschutzmitteln, so sollten die anderen Flammschutzmittel bevorzugt halogenfrei sein.

Die flammwidrige polymere Masse gemäß der Erfindung enthält bevorzugt 98 bis 60 Gew.-% an Polymer oder einer Polymermischung und 2 bis 40 Gew.-% eines halogenfreien cyclischen Phosphorsäureesters.

Bevorzugt handelt es sich bei den Polymeren um Polyurethan-Systeme.

Das Polyurethan-System enthält bevorzugt 2 bis 40 Gew.-% des halogenfreien cyclischen Phosphorsäureesters.

Bei den Polymeren kann es sich um die nachfolgend aufgeführten Substanzen handeln:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.
2. Mischungen der unter 1. genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-Copolymere, Propylen-Isobutylen-Copolymere, Ethylen-Buten-1-Copolymere, Propylen-Butadien- Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere) sowie Terpolymere von Ethylen mit Propylen und einem Dien, wie Hexadien, Dicyclopentadien oder Ethylidennorbornen.
4. Polystyrol, Poly(p-methylstyrol).
5. Copolymere von Styrol oder α-Methylstyrol mit Dienen oder Acrylderivaten, wie beispielsweise Styrol-Butadien, Styrol-Maleinsäureanhydrid, Styrol-Acrylnitril, Styrol-Ethylmethacrylat, Styrol-Butadien-Ethylacrylat, Styrol-Acrylnitril-Methacrylat; Mischungen von hoher Schlagzähigkeit aus Styrol-Copolymeren und einem anderen Polymer, wie beispielsweise einem Polyacrylat, einem Dien-Polymeren oder einem Ethylen-Propylen-Dien-Terpolymeren sowie Block-Copolymere des Styrols, wie beispielsweise Styrol-Butadien-Styrol, Styrol-Isopren-Styrol, Styrol-Ethylen/Butylen- Styrol oder Styrol-Ethylen/Propylen-Styrol.
6. Pfropfcopolymere von Styrol, wie beispielsweise Styrol auf Polybutadien, Styrol und Acrylnitril auf Polybutadien, Styrol und Maleinsäureanhydrid auf Polybutadien, Styrol und
   Alkylacrylate oder Alkylmethacrylate auf Polybutadien, Styrol und Acrylntiril auf EthylenPropylen-Dien-Terpolymeren, Styrol und Acrylnitril auf Polyalkylacrylaten oder Polyalkylmethacrylaten, Styrol und Acrylnitril auf Acrylat-Butadien-Copolymeren sowie deren Mischungen mit den unter 5. genannten Copolymeren, die beispielsweise als sogenannte ABS-, MBS-, ASA- oder AES-Polymere bekannt sind.
7. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyalkylphthalat, Polyallylmelamin.
8. Polyphenylenoxyde und -sulfide und deren Mischungen mit Styrolpolymeren.
9. Polyurethane, die sich von Polyethern, Polyestern und Polybutadienen mit endständigen Hydroxylgruppen einerseits und aliphatischen oder aromatischen Polyisocyanaten andererseits ableiten sowie deren Vorprodukte (Polyisocyanat-Polyol-Prepolymere).
10. Vernetzte Polymere, die sich von Aldehyden einerseits und Phenolen, Harnstoff oder Melamin andererseits ableiten, die Phenol-Formaldehyd-, Harnstoff-Formaldehyd- und Melamin-Formaldehydharze.
11. Mischungen der oben erwähnten Polymere bzw. Mischungen von oben nicht erwähnten Polymeren, wie beispielsweise PP/EPDM, Polyamid-6/EPDM oder ABS, PVC/EVA, PVC/ABS, PVC/MBS, PC/ABS, PBTP/ABS, PC/ASA, POM/thermoplastisches PUR, POM/MBS, PPE/HIPS, PA/HDPE, PA/PP, PA/PPE.
12. Ungesättigte Polyesterharze. Unter ungesättigten Polyesterharzen sollen die Produkte verstanden werden, die durch Kondensationsreaktionen aus gesättigten und ungesättigten Dicarbonsäuren oder deren Anhydriden und Diolen hergestellt werden können. Als Dicarbonsäuren hierfür werden Maleinsäure und Fumarsäure genannt. Das am häufigsten verwendete Monomer ist das Styrol, das sich beliebig mit Polyesterharzen mischen läßt.
13. Epoxidharze. Unter Epoxidharzen sollen Verbindungen verstanden werden, die durch Polyadditionsreaktion aus einer Epoxidkomponente und einer Vernetzungskomponente (Härter) hergestellt werden können. Die Epoxidkomponente kann auch durch Zusatz geeigneter Katalysatoren mit sich selbt vernetzen. Als Epoxidkomponenten werden genannt: Aromatische Polyglycidylether wie Bisphenol A-bisglycidylether, Bisphenol F-bisgylcidylether und Bisphenol S-bisglycidylether, Polyglycidylether von Phenol/Formaldehyd- und Kresol/Formaldehyd-Harzen Diglycidylether von Phthal-, Tetrahydrophthal-, Isophthal- und Terephthalsäure, Triglycidylcyanurat und/oder Hydantoin-Epoxidharze. Die Vernetzung (Härtung) kann mit Polyaminen wie Triethylentetramin, Polyamidoaminen, mehrbasigen Säuren oder deren Anhydriden, etwa Phthalsäureanhydrid oder Hexahydrophthalsäureanhydrid durchgeführt werden, ggf. unter Zusatz von Beschleunigern und/ oder Katalysatoren.

Die erfindungengemäßen polymeren Massen können auch zusätzlich bis zu 80 Gew.-% an Füllstoffen und Verstärkungsmitteln enthalten, wie beispielsweise Calciumcarbonat, Silikate, Glasfasern, Asbest, Talk, Kaolin, Glimmer, Bariumsulfat, Metalloxide und -hydroxide, Ruß und/oder Graphit.

Bevorzugt sind dabei Formmassen, die zusätzlich 10 bis 50 Gew.-% an Füllstoffen und Verstärkungsmitteln enthalten.

Die halogenfreien cyclischen Phosphorsäureester, wie sie erfindungsgemäß verwendet werden, können durch folgende Verfahrensschritte hergestellt werden:
1. Reaktion von 2,2-Dimethyl-1,3-propandiol mit Phosphoroxichlorid: 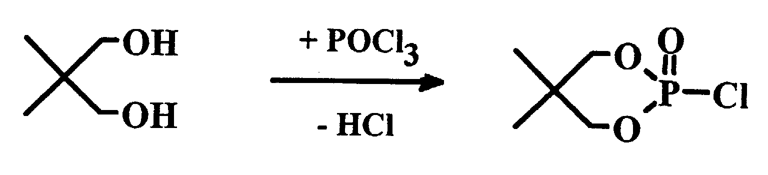
2. Umsetzung des cyclischen Phosphorsäureesterchlorids (I) mit Phenolen:

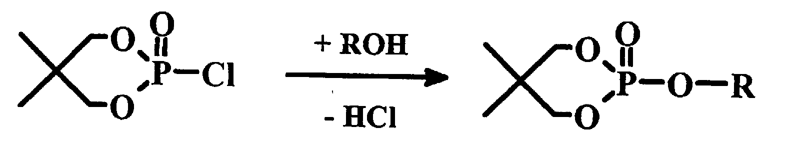

Die Umsetzungen können in geeigneten inerten Lösungsmitteln, wie Aromaten, Aliphaten, Cycloaliphaten oder Chloraliphaten, und in Gegenwart geeigneter tertiärer Amine, wie Triethylamin oder Pyridin, sowie in Gegenwart geeigneter Katalysatoren, wie Aluminiumchlorid, durchgeführt werden.

Das Verfahren zur Herstellung dieser halogenfreien cyclischen Phosphorsäureester kann unter Normaldruck oder unter vermindertem Druck durchgeführt werden.

Die Prozentangaben in den folgenden Beispielen sind Masse-Prozente.

### Beispiel 1 (Herstellung des Flammschutzmittels)

Das 5,5-Dimethyl-2-oxo-2-phenoxy-1,3,2-dioxaphosphorinan wurde nach R.L. Mc Connell und H.W. Coover jr., J. Org. Chem. 24, 630 - 636 (1959) hergestellt und gereinigt.

### Beispiele 2 bis 10

Den Versuchen zur Herstellung von flammwidrigen Polyester-Polyurethan-Weichschäumen lag folgende Rezeptur zugrunde (Teile steht für Gew.-Teile):

| | |
|---|---|
| 100 Teile | Polyol |
| | ®Desmophen 2200, ein Polyesterpolyol der BAYER AG, Leverkusen, mit einer Hydroxylzahl von 60 mg KOH/g, einer Dichte von 1,18 g/ml und einer Viskosität von 17.500 mPa·s bei 25 °C |
| 2,5 - 20 Teile | Flammschutzmittel |
| 3,5 Teile | Wasser |
| 1,5 Teile | Katalysator |
| | ®Desmorapid DB, ein tertiäres Amin der BAYER AG, Leverkusen, als leicht gelbliche, klare Flüssigkeit mit einer Dichte von ca. 0,9 g/ml bei 25 °C und einem Siedepunkt von 179-182 °C |
| 1,0 Teile | Siliconstabilisator |
| | ®Niax SE-232, ein Siliconstabilisator der Fa. OSi Specialities S.A., Meyrin (Schweiz), mit einer Dichte von 1,01 g/ml bei 25 °C und einer Viskosität von 330 mPa^{.}s bei 25 °C. |
| 45,5 Teile | Diisocyanato-toluol |
| | ®Desmorapid T80, ein 80/20-Gemisch der 2,4- und 2,6-Diisocyanatotoluole der BAYER AG, Leverkusen mit einer Dichte von 1,221 g/ml bei 20 °C und einem Schmelzpunkt von 13,6 °C. |

Bei den nachfolgenden Beispielen wurden folgende Flammschutzmittel eingesetzt:
- Produkt aus Beispiel 1
- ®Hostaflam AP 422, ein langkettiges Ammoniumpolyphosphat der HOECHST AG, Frankfurt, mit einer Dichte von 1,9 g/ml, einem Phosphorgehalt von 31,5 % und einem Stickstoffgehalt von 14,5 %.

Zur Beurteilung der Flammwidrigkeit wurden Brandtests gemäß ASTM-D2863 (Sauerstoff-Index), (J. Troitzsch, ibidem, S. 217-218), gemäß UL 94-Horizontaltest für Weichschaum (J. Troitzsch, ibidem, S. 348-349) und gemäß DIN 4102, Teil 1, durchgeführt.

Wie die Vergleichsbeispiele mit Ammoniumpolyphosphat, dem Standard-Flammschutzmittel für halogenfreie flammwidrige Polyester-PUR-Weichschäume, in Tabelle 1, Beispiele 5-7, zeigen, ist trotz eines Phosphorgehaltes des Schaums von 2,06 bis 3,87 % keine Einstufung in die Klasse DIN 4102-B2 möglich.

Dagegen wird bei den Versuchen mit dem erfindungsgemäßen halogenfreien cyclischen Phosphorsäureester bereits bei Phosphorgehalten > 1,21 % eine DIN 4102-B2-Einstufung erreicht.

Noch deutlicher wird der Unterschied in der Flammschutzeffektivität beim UL 94-Horizontaltest (siehe Tabelle 2). Hier wird bereits mit 0,43 % Phosphor im PUR-Weichschaum ein UL 94-HF1, die beste Klasse im UL 94-Horizontaltest, erreicht, während für die gleiche Einstufung beim Ammoniumpolyphosphat Phosphorgehalte von 2,99 % erforderlich sind.

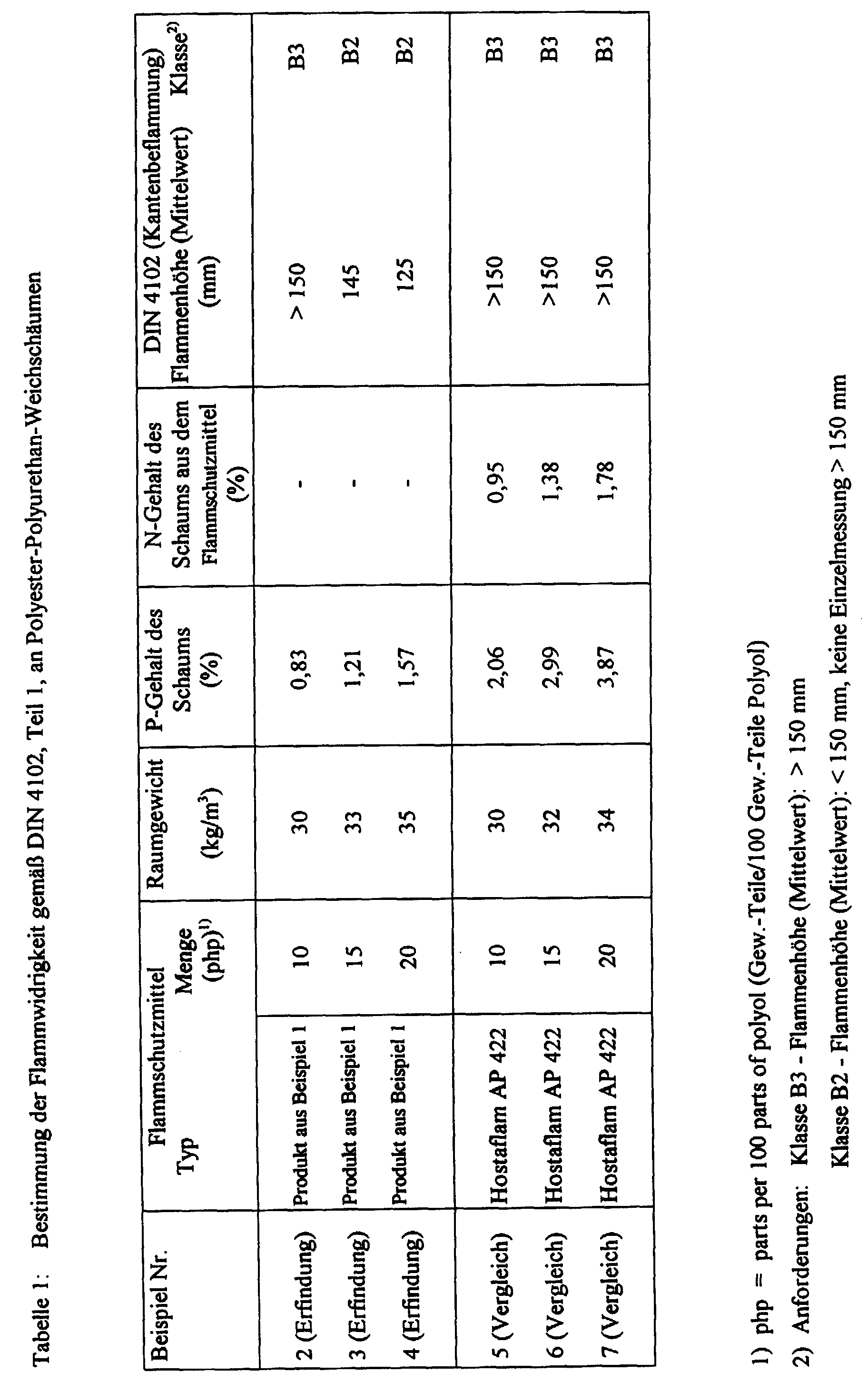

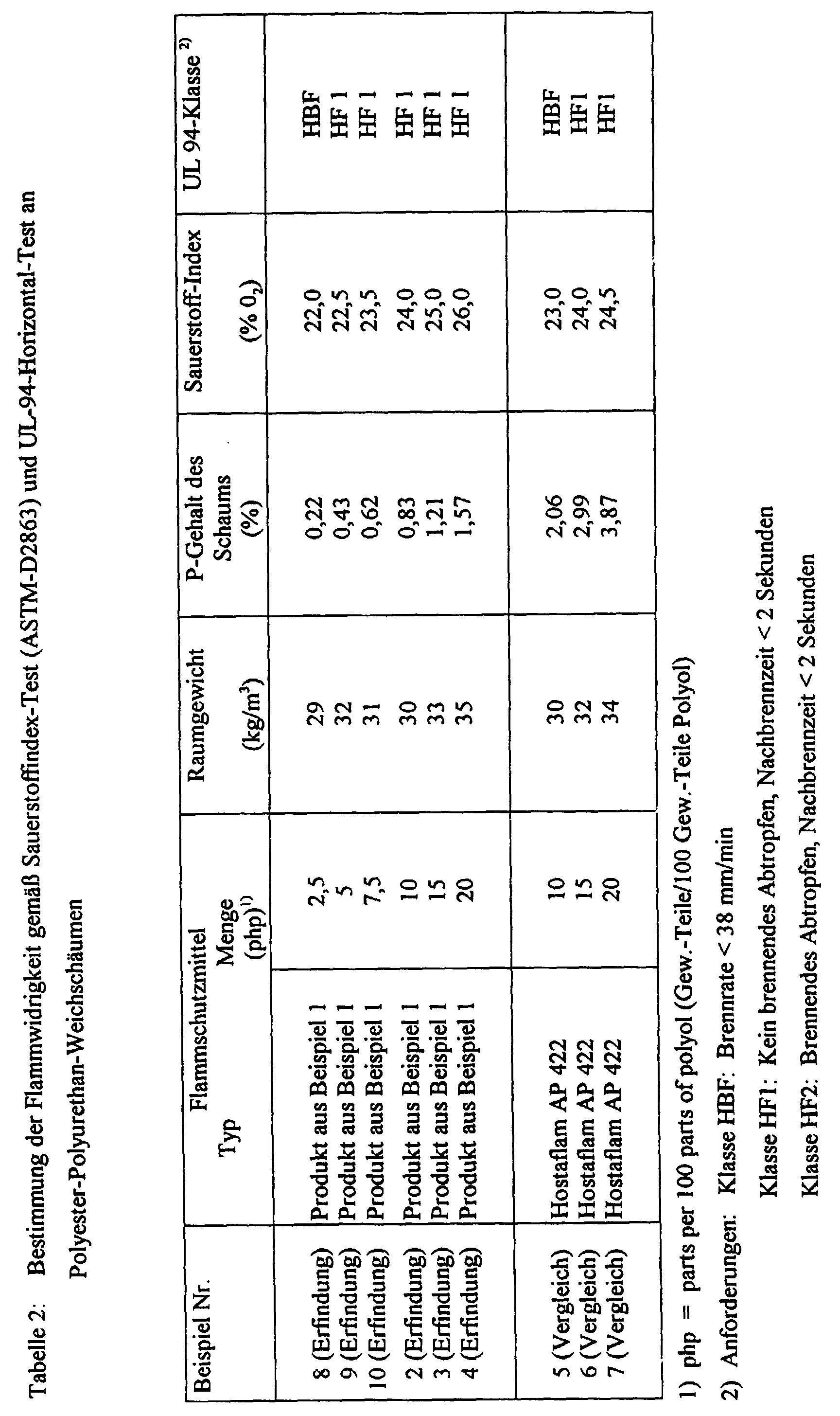

## Patentansprüche

1. Flammwidrige polymere Massen, dadurch gekennzeichnet, daß sie einen halogenfreien cyclischen Phosphorsäureester der allgemeinen Formel (I) 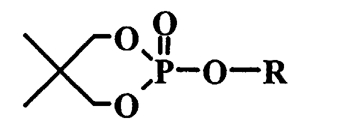 mit
R = Phenyl, 2-Methylphenyl, 3-Methylphenyl, 4-Methylphenyl, 2,3-Dimethylphenyl, 2,4-Dimethylphenyl, 2,5-Dimethylphenyl, 2,6-Dimethylphenyl, 3,4-Dimethylphenyl oder 3,5-Dimethylphenyl
enthalten.

2. Flammwidrige polymere Massen nach Anspruch 1, dadurch gekennzeichnet, daß sie einen halogenfreien cyclischen Phosphorsäureester in Kombination mit anderen Flammschutzmitteln enthalten.

3. Flammwidrige polymere Massen nach Anspruch 2, dadurch gekennzeichnet, daß die anderen Flammschutzmittel halogenfrei sind.

4. Flammwidrige polymere Massen nach mindestens einem der Ansprüche 1 bis 3, dadurch gekennzeichnet, daß sie 98 bis 60 Gew.-% eines Polymeren oder einer Polymermischung und 2 bis 40 Gew.-% eines halogenfreien cyclischen Phosphorsäureesters der allgemeinen Formel (I) enthalten.

5. Flammwidrige polymere Massen nach mindestens einem der Ansprüche 1 bis 4, dadurch gekennzeichnet, daß es sich dabei um Polyurethan-Systeme handelt.

6. Polyurethan-System, enthaltend 2 bis 40 Gew.-% eines halogenfreien cyclischen Phosphorsäureesters der allgemeinen Formel (I).

## Claims

1. A flame retardant polymeric composition, which comprises a halogen-free cyclic phosphoric acid ester of the formula (I) 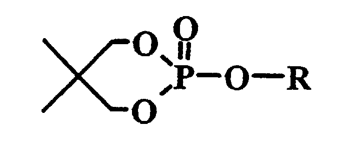 where
R = phenyl, 2-methylphenyl, 3-methylphenyl, 4-methylphenyl, 2,3-dimethylphenyl, 2,4-dimethylphenyl, 2,5-dimethylphenyl, 2,6-dimethylphenyl, 3,4-dimethylphenyl or 3,5-dimethylphenyl.

2. A flame retardant polymeric composition as claimed in claim 1, which comprises a halogen-free cyclic phosphoric acid ester in combination with another flameproofing agent.

3. A flame retardant polymeric composition as claimed in claim 2, wherein the other flameproofing agent is halogen-free.

4. A flame retardant polymeric composition as claimed in at least one of claims 1 to 3, which comprises 98 to 60% by weight of a polymer or of a polymer mixture and 2 to 40% by weight of a halogen-free cyclic phosphoric acid ester of the formula (I).

5. A flame retardant polymeric composition as claimed in at least one of claims 1 to 4, which is a polyurethane system.

6. A polyurethane system comprising 2 to 40% by weight of a halogen-free cyclic phosphoric acid ester of the formula (I).

## Revendications

1. Masses polymères ignifuges, caractérisées en ce qu'elles contiennent un ester phosphorique cyclique exempt d'halogène de formule générale (I) 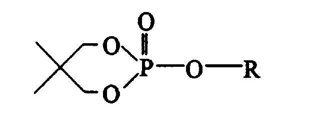 dans laquelle R = phényle, 2-méthylphényle, 3-méthylphényle, 4-méthylphényle, 2,3-diméthylphényle, 2,4-diméthylphényle, 2,5-diméthylphényle, 2,6-diméthylphényle, 3,4-diméthylphényle ou 3,5-diméthylphényle.

2. Masses polymères ignifuges selon la revendication 1, caractérisées en ce qu'elles contiennent un ester phosphorique cyclique exempt d'halogène en combinaison avec d'autres agents ignifugeants.

3. Masses polymères ignifuges selon la revendication 2, caractérisées en ce que les autres agents ignifugeants sont exempts d'halogènes.

4. Masses polymères ignifuges selon au moins l'une des revendications 1 à 3, caractérisées en ce qu'elles contiennent de 98 à 60 % en poids d'un polymère ou mélange de polymères et de 2 à 40 % en poids d'un ester phosphorique cyclique exempt d'halogène de formule générale (I).

5. Masses polymères ignifuges selon au moins l'une des revendications 1 à 4, caractérisées en ce qu'il s'agit de compositions de polyuréthanes.

6. Composition de polyuréthane contenant 2 à 40 % en poids d'un ester phosphorique cyclique exempt d'halogène de formule générale (I).
